# EUROPEAN PATENT APPLICATION

(11) **EP 2 418 363 A1**
(43) Date of publication of application: **15.02.2012**
(21) Application number: 09843047.3
(22) Date of filing: 10.04.2009
(51) Int. Cl.: F01N 3/20, F01N 3/08, F01N 3/24, F02B 37/00, F02B 37/16

(54) **CONTROL DEVICE FOR INTERNAL COMBUSTION ENGINE**

(71) Applicant: Toyota Jidosha Kabushiki Kaisha, Toyota-shi, Aichi 471-8571 (JP)
(72) Inventor: YOSHIDA, Kohei, Toyota-shi Aichi 471-8571 (JP); ASANUMA, Takamitsu, Toyota-shi Aichi 471-8571 (JP); MORISHIMA, Akinori, Toyota-shi Aichi 471-8571 (JP); INOUE, Mikio, Toyota-shi Aichi 471-8571 (JP)
(74) Representative: Intès, Didier Gérard André
(86) International application number: PCT/JP2009/057709
(87) International publication number: WO 2010/116541

(57) **Abstract**

A control system of an internal combustion engine which arranges in an engine exhaust passage an exhaust turbine 7b of an exhaust driven type supercharger 7, arranges in the exhaust passage downstream of the exhaust turbine 7b an exhaust purification catalyst 22, connects the exhaust passage between the exhaust purification catalyst 22 and the exhaust turbine 7b with the exhaust passage upstream of the exhaust turbine 7b by a bypass passage 26, arranges in the bypass passage 26 a storing agent 27 which stores a specific ingredient in the exhaust, and is provided with an exhaust gas flow switching device 28 which selectively switches the exhaust gas flow between a flow which flows through the exhaust turbine 7b into the exhaust purification catalyst 22 and a flow which flows through the bypass passage 26 into the exhaust purification catalyst 22. It switches the exhaust gas flow to the flow through the bypass passage 26 when the exhaust purification catalyst 22 should be raised in temperature and performs desorption control to desorb the ingredient stored in the storing agent 27, then switches the exhaust gas flow to the flow through the exhaust turbine 7b when the temperature of the exhaust purification catalyst 22 rises to a target temperature.

## Description

### Technical Field

The present invention relates to a control system of an internal combustion engine.

### Background Art

Known in the art is a control system of an internal combustion engine which arranges in an engine exhaust passage an exhaust turbine of an exhaust driven type supercharger, arranges in the exhaust passage downstream of the exhaust turbine a first catalyst, connects an exhaust passage between an exhaust purification catalyst and the exhaust turbine and the exhaust passage upstream of the exhaust turbine by a bypass passage, arranges in the bypass passage a second catalyst which adsorbs harmful ingredients in the exhaust gas, and is provided with an exhaust gas flow switching device which selectively switches an exhaust gas flow between a flow flowing through the exhaust turbine into the first catalyst and a flow flowing through the bypass passage into the first catalyst (see PLT 1).

According to such a control system of an internal combustion engine, at the time of startup of the internal combustion engine, the exhaust gas flow is switched to a flow through the bypass passage, while after the first catalyst is activated, the exhaust gas flow is switched to a flow through the exhaust turbine. After this, the exhaust gas flow is again switched to a flow through the bypass passage and the harmful ingredients which are adsorbed at the second catalyst are desorbed. Therefore, early activation of the first catalyst is promoted and deterioration of the exhaust properties is prevented by the second catalyst until the first catalyst is activated.

However, after the first catalyst is activated, when switching the exhaust gas flow to a flow through the exhaust turbine, the exhaust turbine of the still insufficiently warmed up exhaust driven type supercharger causes the exhaust gas to end up falling in temperature. Low temperature exhaust gas flows into the first catalyst, as a result of which its temperature falls and activity is lost, so the exhaust properties are liable to deteriorate. Considering this point, it may be considered to retard more the timing of switching the exhaust gas flow to a flow through the exhaust turbine and causing the temperature of the first catalyst to sufficiently rise so that even if low temperature exhaust gas flows in, activity is not lost. However, if retarding the timing for switching the exhaust gas flow to a flow through the exhaust turbine, during that interval, it will not be possible to utilize the exhaust driven type supercharger and the driveability may deteriorate.

### Citation List

### Patent Literature

PLT 1: Japanese Patent Publication (A) No. 2001-193445

### Summary of Invention

### Technical Problem

Therefore, an object of the present invention is to provide a control system of an internal combustion engine which can prevent deterioration of the exhaust properties while enabling utilization of the exhaust driven type supercharger earlier.

### Solution to Problem

In a first aspect of the present invention, there is provided a control system of an internal combustion engine which arranges in an engine exhaust passage an exhaust turbine of an exhaust driven type supercharger, arranges in the exhaust passage downstream of the exhaust turbine an exhaust purification catalyst, connects the exhaust passage between the exhaust purification catalyst and the exhaust turbine with the exhaust passage upstream of the exhaust turbine by a bypass passage, arranges in the bypass passage a storing agent which stores a specific ingredient in the exhaust, and is provided with an exhaust gas flow switching device which selectively switches the exhaust gas flow between a flow which flows through the exhaust turbine into the exhaust purification catalyst and a flow which flows through the bypass passage into the exhaust purification catalyst, the control system of an internal combustion engine using the exhaust gas flow switching device to switch the exhaust gas flow to the flow through the bypass passage when the exhaust purification catalyst should be raised in temperature and performing desorption control to desorb the ingredient stored in the storing agent, then using the exhaust gas flow switching device to switch the exhaust gas flow to the flow through the exhaust turbine when the temperature of the exhaust purification catalyst rises to a target temperature.

In a second aspect of the present invention, there is provided a control system of an internal combustion engine **characterized in that** the specific ingredient is an HC and the storing agent is an HC absorbent.

In a third aspect of the present invention, there is provided a control system of an internal combustion engine **characterized in that** the specific ingredient is NOx and the storing agent is an NOx storage reduction catalyst which stores NOx which is contained in the exhaust gas when an air-fuel ratio of the inflowing exhaust gas is lean, and reduces and purifies the stored NOx when the air-fuel ratio of the inflowing exhaust gas becomes a stoichiometric air-fuel ratio or rich.

In a fourth aspect of the present invention, there is provided a control system of an internal combustion engine **characterized in that** the specific ingredient is CO and the storing agent is a CO absorbent.

### Advantageous Effects of Invention

According to these aspects of the present invention, it is possible to prevent deterioration of the exhaust properties while enabling early utilization of the exhaust driven type supercharger.

Below, the present invention will be able to be understood more fully from the attached drawings and the description of the preferred embodiments of the present invention.

### Brief Description of Drawings

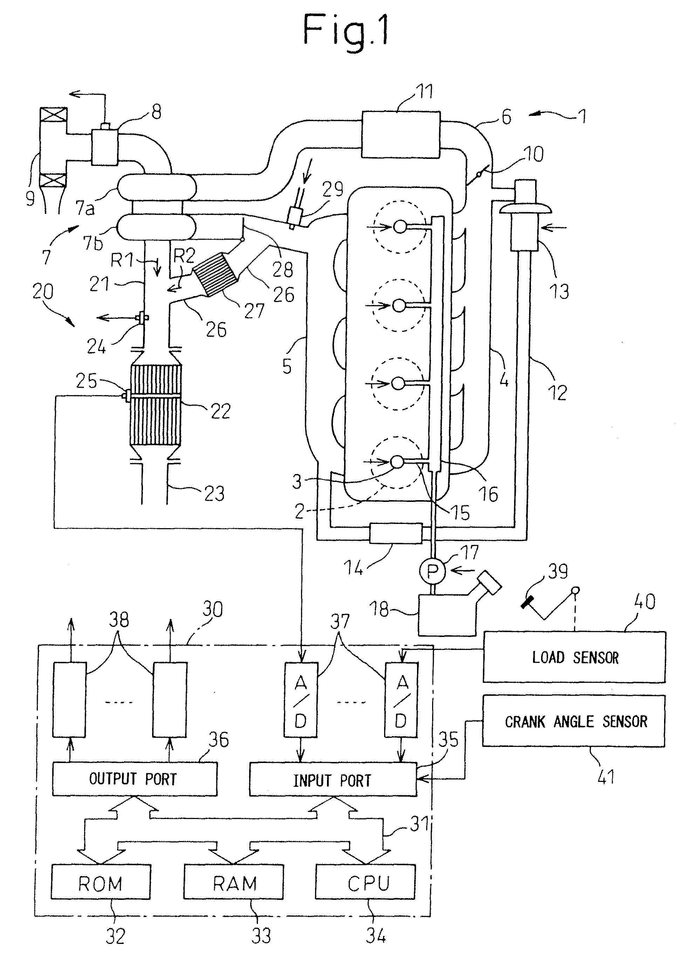

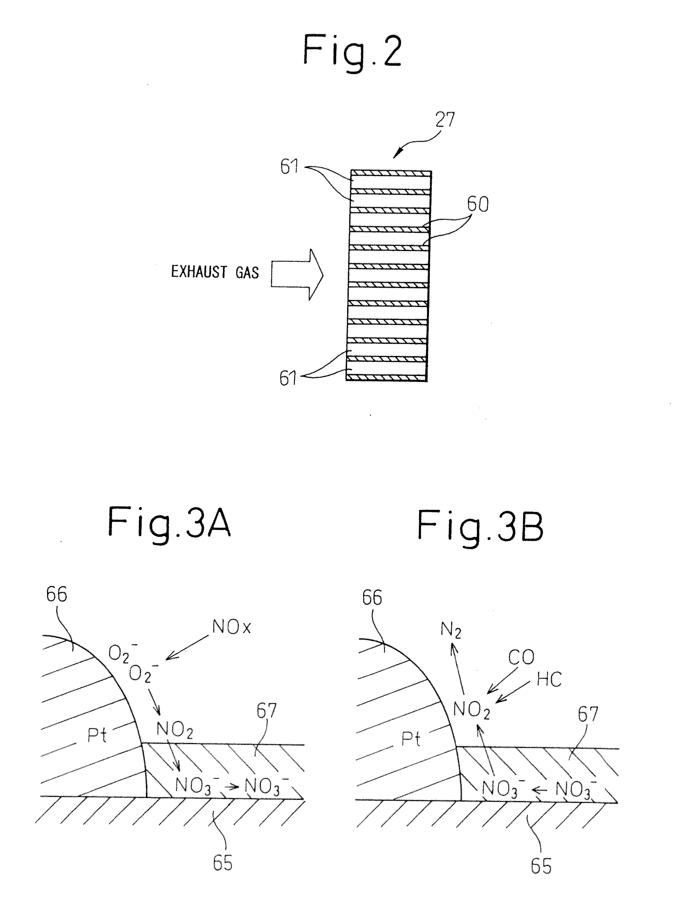

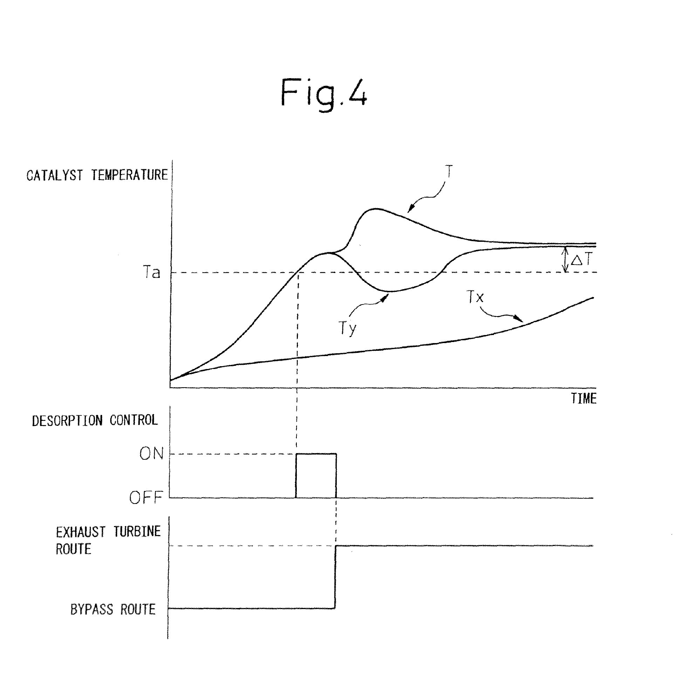

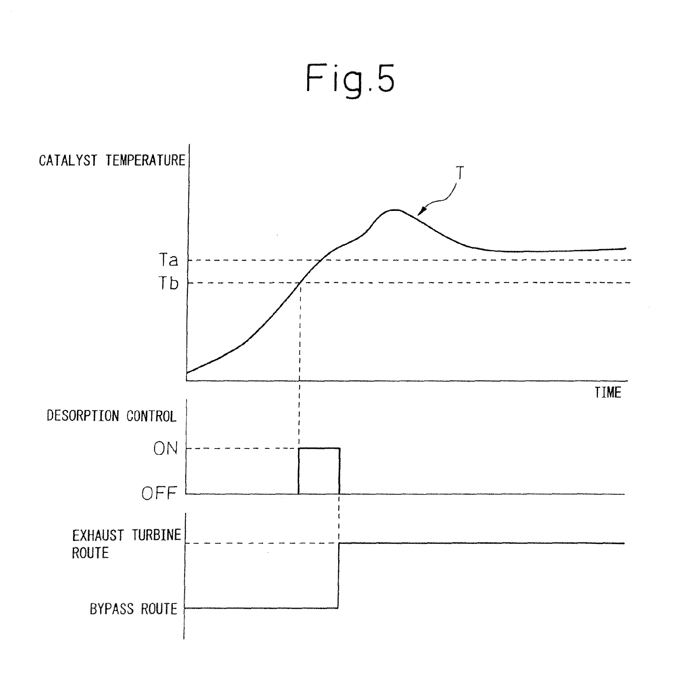

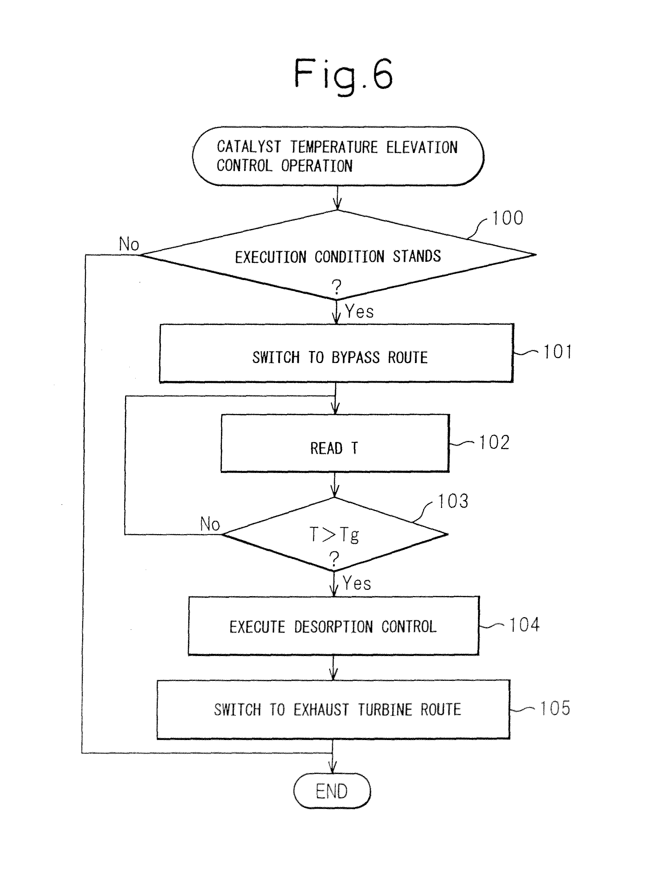

FIG. 1 is an overall view of a compression ignition type internal combustion engine, FIG. 2 is a view showing a structure of an NOx storage reduction catalyst, FIG. 3A and FIG. 3B are cross-sectional views of a surface part of a catalyst carrier of an NOx storage reduction catalyst, FIG. 4 is a view showing a relationship at the time of engine startup among a catalyst temperature, desorption control, and a route of exhaust gas flow, FIG. 5 is a view showing a relationship at time of engine startup among a catalyst temperature, desorption control, and a route of exhaust gas flow, and FIG. 6 is a flowchart of a catalyst temperature elevation control operation.

### Description of Embodiments

FIG. 1 shows the case of application of the present invention to a compression ignition type internal combustion engine. However, the present invention may also be applied to a spark ignition type internal combustion engine.

Referring to FIG. 1, 1 indicates an engine body, 2 a combustion chamber of each cylinder, 3 an electronic control type fuel injector for injecting fuel into each combustion chamber 2, 4 an intake manifold, and 5 an exhaust manifold. The intake manifold 4 is connected through an intake duct 6 to an outlet of a compressor 7a of an exhaust driven type supercharger 7, while an inlet of the compressor 7a is connected through an air flow meter 8 for detection of an intake air amount to an air cleaner 9. Inside the intake duct 6, a throttle valve 10 which is driven by a step motor is arranged. Furthermore, around the intake duct 6, a cooling device 11 is arranged for cooling the intake air which flows inside of the intake duct 6. In the embodiment shown in FIG. 1, engine cooling water is guided into the cooling device 11 where the engine cooling water is used to cool the intake air. On the other hand, the exhaust manifold 5 is connected to an inlet of an exhaust turbine 7b of the exhaust driven type supercharger 7, while an outlet of the exhaust turbine 7b is connected to an exhaust post-treatment device 20.

The exhaust manifold 5 and the intake manifold 4 are connected to each other through an exhaust gas recirculation (hereinafter referred to as "EGR") passage 12. Inside the EGR passage 12, an electronic control type EGR control valve 13 is arranged. Further, around the EGR passage 12, a cooling device 14 is arranged for cooling the EGR gas which flows through the inside of the EGR passage 12. In the embodiment shown in FIG. 1, the engine cooling water is guided into the cooling device 14 where the engine cooling water is used to cool the EGR gas. On the other hand, each fuel injector 3 is connected through a fuel feed tube 15 to a common rail 16. This common rail 16 is supplied with fuel from an electronic control type variable discharge fuel pump 17, while the fuel which is supplied into the common rail 16 is supplied through each fuel feed tube 15 to a fuel injector 3.

The exhaust post-treatment device 20 has an exhaust pipe 21 which is connected to the outlet of the exhaust turbine 7b, an exhaust purification catalyst 22 which is connected to the exhaust pipe 21, and an exhaust pipe 23 which is connected to the exhaust purification catalyst 22. Further, in the exhaust pipe 21, an air-fuel ratio sensor 24 is arranged for detecting an air-fuel ratio of exhaust gas which flows into the exhaust purification catalyst 22. At the exhaust purification catalyst 22, a temperature sensor 25 is attached for detecting the catalyst temperature T.

Further, the exhaust manifold 5 and the exhaust pipe 21 are connected by a bypass passage 26. Inside the bypass passage 26, a storing agent 27 is arranged for storing a specific ingredient in the exhaust gas. In the present embodiment, as the storing agent 27, an NOx storage reduction catalyst 27 is used. Near the inlet of the bypass passage 26, an exhaust gas flow switching valve 28 which is driven by a step motor is arranged. The exhaust gas flow can be selectively switched between an exhaust turbine route R1 where it flows through the exhaust turbine 7b to the exhaust purification catalyst 22 and a bypass route R2 where it flows through the bypass passage 26 to the exhaust purification catalyst 22. The exhaust gas flow switching valve 28 shown in FIG. 1 closes the exhaust turbine route R1 and opens the bypass route R2 in the state shown.

Note that, the exhaust gas flow switching valve 28 may employ any mechanism if able to selectively switch the exhaust gas flow between the exhaust turbine route R1 and the bypass route R2. For example, it may be a blocking plate which is arranged inside of the bypass passage 26 and which is able to selectively switch between blocking and opening a passage. When the blocking plate blocks the bypass passage 26, the exhaust gas flow passes through the exhaust turbine route R1, while when it opens the bypass passage 26, the exhaust gas flow passes through the bypass route R2 which is lower in pressure than the exhaust turbine route R1.

Furthermore, as shown in FIG. 1, at the exhaust manifold 5, a fuel addition valve 29 is attached. This fuel addition valve 28 is given fuel as a reducing agent from the common rail 16. Fuel is added from the fuel addition valve 28 to the inside of the exhaust manifold 5. In an embodiment of the present invention, this fuel is comprised of diesel oil. It is also possible to inject additional fuel from a fuel injector 3 in the engine combustion stroke or exhaust stroke so as to add fuel into the exhaust passage. Furthermore, as the reducing agent, instead of the addition of fuel from the fuel addition valve 28, it is also possible to generate exhaust gas containing CO (carbon monoxide) and generate exhaust gas of a rich air-fuel ratio. CO has a higher reducibility than fuel and can be generated by making the air-fuel ratio of the air-fuel mixture of a combustion chamber 2 rich and burning the fuel at a high temperature.

An electronic control unit 30 is comprised of a digital computer which is provided with components connected with each other by a bi-directional bus 31 such as a ROM (read only memory) 32, RAM (random access memory) 33, CPU (microprocessor) 34, input port 35, and output port 36. Output signals of the air flow meter 8, air-fuel ratio sensor 24, and temperature sensor 25 are input through respectively corresponding AD converters 37 to the input port 35. Further, an accelerator pedal 39 is connected to a load sensor 40 generating an output voltage proportional to the depression amount L of the accelerator pedal 39. The output voltage of the load sensor 40 is input through the corresponding AD converter 37 to the input port 35. Further, the input port 35 has a crank angle sensor 41 generating an output pulse every time the crankshaft rotates by for example 15° connected to it. On the other hand, the output port 36 has the fuel injectors 3, throttle valve 10 drive step motor, EGR control valve 13, fuel pump 17, and fuel addition valve 29 connected to it through corresponding drive circuits 38.

FIG. 2 shows the structure of the NOx storage reduction catalyst 27. In the embodiment shown in FIG. 2, the NOx storage reduction catalyst 27 forms a honeycomb structure which is provided with a plurality of exhaust flow passages 61 which are separated from each other by thin partition walls 60. On the two surfaces of each partition plate 60, a catalyst carrier comprised of for example alumina is carried. FIG. 3A and FIG. 3B illustrate cross-sections of the surface part of this catalyst carrier 65. As shown in FIG. 3A and FIG. 3B, a precious metal catalyst 66 is carried dispersed on the surfaces of the catalyst carrier 65. Furthermore, a layer of an NOx absorbent 67 is formed on the surface of the catalyst carrier 65.

In this embodiment according to the present invention, as the precious metal catalyst 66, platinum Pt is used. As the ingredients forming the NOx absorbent 67, for example, at least one element selected from potassium K, sodium Na, cesium Cs, or another such alkali metal, barium Ba, calcium Ca, or another such alkali earth, lanthanum La, yttrium Y, or another such rare earth is used.

If the ratio of the air and fuel (hydrocarbons) which are fed into the engine intake passage, combustion chambers 2, and exhaust passage upstream of the NOx storage reduction catalyst 27 is called the "air-fuel ratio of the exhaust gas", the NOx absorbent 67 absorbs NOx when the air-fuel ratio of the exhaust gas is lean and releases the absorbed NOx when the oxygen concentration in the exhaust gas falls, for an NOx absorption/release action.

That is, if explaining this taking as an example the case of using barium Ba as the ingredient forming the NOx absorbent 67, when the air-fuel ratio of the exhaust gas is lean, that is, when the oxygen concentration in the exhaust gas is high, the NO which is contained in the exhaust gas, as shown in FIG. 3A, is oxidized on the platinum Pt 66 and becomes NO₂, next is absorbed in the NOx absorbent 67 and bonds with the barium oxide BaO while diffusing in the NOx absorbent 67 in the form of nitric acid ions NO₃⁻ . In this way, the NOx is absorbed in the NOx absorbent 67. So long as the oxygen concentration in the exhaust gas is high, NO₂ is formed on the surface of the platinum Pt 66. So long as the NOx absorption ability of the NOx absorbent 67 is not saturated, the NO₂ is absorbed in the NOx absorbent 67 and nitric acid ions NO₃⁻ are generated.

As opposed to this, if the air-fuel ratio of the exhaust gas is made rich or the stoichiometric air-fuel ratio, the oxygen concentration in the exhaust gas falls, so the reaction proceeds in the opposite direction (NO₃⁻ →NO₂) and therefore, as shown in FIG. 3B, the nitric acid ions NO₃⁻ in the NOx absorbent 67 are released in the form of NO₂ from the NOx absorbent 67. Next, the released NOx is reduced by the unburned HC and CO which are contained in the exhaust gas.

In the internal combustion engine shown in FIG. 1, combustion is continued under a lean air-fuel ratio. So long as no fuel is added from the fuel addition valve 29, the air-fuel ratio of the exhaust gas which flows into the NOx absorbent 67 is maintained lean. At this time, the NOx in the exhaust gas is absorbed in the NOx absorbent 67. However, if combustion is continued under a lean air-fuel ratio, during that time the NOx absorption ability of the NOx absorbent 67 will end up becoming saturated and therefore the NOx absorbent 67 will end up no longer able to absorb the NOx. Therefore, in an embodiment of the present invention, before the absorption ability of the NOx absorbent 67 becomes saturated, fuel is added from the fuel addition valve 29 to make the air-fuel ratio of the exhaust gas temporarily rich and thereby make NOx be released from the NOx absorbent 67.

For the exhaust purification catalyst 22, any catalyst may be employed, but the present embodiment is configured by the same casing at the upstream side of which a three-way catalyst is arranged and at the downstream side of which an NOx storage reduction catalyst is arranged.

FIG. 4 is a view showing the relationship in the state where the internal combustion engine is cool at time of engine startup among the catalyst temperature, desorption control, and route of exhaust gas flow. T indicates the catalyst temperature of the exhaust purification catalyst 22, Tx indicates the catalyst temperature of the exhaust purification catalyst of a conventional internal combustion engine which does not have a bypass passage, Ty indicates the catalyst temperature of the exhaust purification catalyst of a conventional internal combustion engine which has a bypass passage similar to the present embodiment, and Ta indicates the activation temperature of the exhaust purification catalyst 22.

A conventional internal combustion engine which does not have a bypass passage, as shown by the catalyst temperature Tx, requires a long time for the exhaust purification catalyst to reach the activation temperature Ta. That is, at time of engine startup, the exhaust purification catalyst is mainly raised in temperature by the inflow of high temperature exhaust gas generated due to the combustion in the combustion chambers, but the high temperature exhaust gas which is exhausted from combustion chambers ends up radiating heat and cooling by passing through the low temperature exhaust turbine which is still not sufficiently warmed before reaching the exhaust purification catalyst. Therefore, to raise the temperature of the exhaust purification catalyst to the activation temperature Ta, it is necessary to first make the exhaust turbine rise in temperature, then make the exhaust purification catalyst rise in temperature, so a certain extent of time is required.

On the other hand, in a conventional internal combustion engine which has a bypass passage, as shown by the catalyst temperature Ty, the exhaust purification catalyst reaches the activation temperature Ta in a shorter time compared with the case of not having a bypass passage. That is, at time of engine startup, the exhaust gas flow is switched to the bypass route, so the high temperature exhaust gas which is produced due to combustion in the combustion chambers flows through the bypass passage to the exhaust purification catalyst without being cooled at the exhaust turbine 7b. Therefore, it becomes possible to promote early temperature rise of the exhaust purification catalyst. However, as explained above, after that, since an exhaust driven type supercharger is used, if the exhaust gas flow is switched to the exhaust turbine route, in the end, the heat in the exhaust gas is absorbed by the low temperature exhaust turbine and the temperature of the exhaust gas ends up falling. If such a low temperature exhaust gas flows into the exhaust purification catalyst, there is the above-mentioned problem that the once activated catalyst is cooled and ends up losing its activity.

Therefore, in an embodiment of the present invention, after making the exhaust purification catalyst 22 rise in temperature and before switching the exhaust gas flow to the exhaust turbine route R1, desorption control of the NOx storage reduction catalyst 24 is executed and the exhaust purification catalyst 22 is made to rise in temperature. Below, this will be explained in detail.

Referring to FIG. 4, first, at time of engine startup, the exhaust gas flow is switched to the bypass route R2. In this state, due to engine operation, the catalyst temperature T rises. When reaching the activation temperature Ta, desorption control is started.

The "desorption control" in the present embodiment means to make the air-fuel ratio of the inflowing exhaust gas temporarily rich and thereby make the NOx which was stored in the NOx storage reduction catalyst 27 be reduced and released. In the present embodiment, the air-fuel ratio is made rich by adding fuel from the fuel addition valve 29. If fuel is added to the NOx storage reduction catalyst 27, as explained above, the NOx and the HC and CO undergo a reduction reaction, whereby reaction heat is generated. Due to this reaction heat, the temperature of the exhaust gas which flows out from the NOx storage reduction catalyst 27 rises. The now high temperature exhaust gas then flows into the exhaust purification catalyst 22 and further raises the catalyst temperature T. In addition as well, the unburned HC in the exhaust gas undergoes an oxidation reaction on the exhaust purification catalyst 22 whereby the catalyst temperature T rises. Further, when using CO as the reducing agent, high temperature combustion is performed in the combustion chambers 2, so the temperature of the exhaust gas becomes higher. This high temperature exhaust gas may be utilized to make the exhaust purification catalyst 22 rise in temperature.

By using the desorption control to make the catalyst temperature T of the exhaust purification catalyst 22 further rise, even if then switching the exhaust gas flow to the exhaust turbine route R1 and low temperature exhaust gas cooled by the exhaust turbine flows in, the catalyst temperature T will never become less than the activation temperature Ta. That is, the execution time of the desorption control, the rich degree of the air-fuel ratio of the exhaust gas, etc., are determined so as to make the catalyst temperature T rise to a temperature where even if low temperature exhaust gas flows in, the catalyst temperature T will not become less than the activation temperature Ta.

Further, the timing of switching by the exhaust gas flow switching valve 28 to the exhaust turbine route R1 is determined so that exhaust gas made a high temperature on the NOx storage reduction catalyst 27 passes through the bypass passage 26 and passes through the exhaust pipe 21 to reliably flow into the exhaust purification catalyst 22. That is, if the timing of switching to the exhaust turbine route R1 becomes too early, the exhaust gas flow switching valve 28 causes the bypass passage 26 to close, whereby the subsequent high temperature exhaust gas flow in the bypass passage 26 ends up stopping without flowing into the exhaust purification catalyst 22. Therefore, the timing of switching by the exhaust gas flow switching valve 28 to the exhaust turbine route R1 is set so that the exhaust gas made a high temperature on the NOx storage reduction catalyst 27 passes through the bypass passage 26 and passes through the exhaust pipe 21 to reliably flow into the exhaust purification catalyst 22.

On the other hand, if the timing of switching to the exhaust turbine route R1 is slow, it is not possible to utilize the exhaust driven type supercharger 7 during that period and the drivability deteriorates. Therefore, the timing of switching to the exhaust turbine route R1 is preferably after the timing when the exhaust gas made a high temperature on the NOx storage reduction catalyst 27 passes through the bypass passage 26 and passes through the exhaust pipe 21 to reliably flow into the exhaust purification catalyst 22 and preferably made early.

In the present embodiment, the desorption control is started when the catalyst temperature T of the exhaust purification catalyst 22 reaches the activation temperature Ta. However, for execution of desorption control at this timing, there is an extra margin of ΔT as shown in FIG. 4 between the lowest temperature of the catalyst temperature T after switching to the exhaust turbine route R1 and the activation temperature Ta. That is, even if making the timing of execution of desorption control earlier, it is possible to prevent the catalyst temperature T which has once risen to the activation temperature Ta from then falling below the activation temperature Ta.

Therefore, in another embodiment shown in FIG. 5, considering this extra margin ΔT, the desorption control is started when the catalyst temperature T of the exhaust purification catalyst 22 becomes a desorption control executable temperature Tb which is lower than the activation temperature Ta. The desorption control executable temperature Tb is determined considering the catalyst temperature T which rises due to the desorption control and the catalyst temperature T which falls due to the switching to the exhaust turbine route R1 so that the catalyst temperature T which once rises to the activation temperature Ta will not subsequently become less than the activation temperature Ta.

By making the timing of execution of desorption control earlier, it is possible to make the timing of switching by the exhaust gas flow switching valve 28 to the exhaust turbine route R1 earlier and possible to utilize the exhaust driven type supercharger earlier.

Note that, in the above embodiment, the present invention was mainly explained with reference to the state where the internal combustion engine is cool at the time of engine startup, but it may also be applied to other cases as well. For example, the case may be considered of satisfying the condition of the catalyst being a predetermined temperature or less, the exhaust turbine being a predetermined temperature or less, idling continuing for a predetermined time, etc.

Further, the embodiment shown in FIG. 4 and FIG. 5 was explained using the example of using the NOx storage reduction catalyst 27 as the storing agent 27 arranged in the bypass passage 26, but it is possible to select any agent so long as it can store a specific ingredient in the exhaust gas and enables the temperature of the exhaust purification catalyst 22 to be raised by desorption control. An HC absorbent and a CO absorbent will be explained below as examples of the storing agent 27.

First, the case where the storing agent 27 is an HC absorbent 27 will be explained. The HC absorbent 27 forms a honeycomb structure similar to the NOx storage reduction catalyst 27 shown in FIG. 2. The HC absorbent 27 is for example formed from zeolite, alumina, ceria, zirconia, or silica and composite oxides of these. Basically, it adsorbs the HC in the inflowing exhaust gas when the temperature of the HC absorbent 27 is a reference temperature or less (for example, about 350°C) and desorbs the adsorbed HC when the temperature of the HC absorbent 27 is higher than the reference temperature. Therefore, as desorption control, temperature elevation control is performed for making the HC absorbent rise in temperature. Temperature elevation control is for example the method of retarding the injection timing of fuel so as to make the temperature of the exhaust gas rise, the method of injecting fuel into the combustion chambers 2 in the second half of the exhaust stroke so as to make the temperature of the exhaust gas rise, or the method of using a variable valve operation mechanism which changes the opening operation of the intake valves and exhaust valves so as to make high temperature exhaust gas being burned flow into the exhaust system.

If performing this temperature elevation control, the HC which was adsorbed at the HC absorbent 27 is desorbed into the exhaust gas and the exhaust gas containing this HC flows into the exhaust purification catalyst 22. Due to this, the HC in the exhaust gas undergoes an oxidation reaction on the exhaust purification catalyst 22 whereby the catalyst temperature T rises and therefore even if low temperature exhaust gas which passed through the exhaust turbine route R1 flows in, the temperature will not fall below the activation temperature Ta. Further, exhaust gas which contains HC itself becomes a high temperature due to temperature elevation control and therefore contributes to the rise in temperature of the exhaust purification catalyst 22.

Next, the case where the storing agent 27 is a CO absorbent 27 will be explained. The CO absorbent 27 forms a honeycomb structure similar to the NOx storage reduction catalyst 27 shown in FIG. 2. The CO absorbent 27 is for example comprised of ceria on which Pd is carried. Basically, it adsorbs the CO in the inflowing exhaust gas when the temperature of the CO absorbent 27 is a reference temperature or less and desorbs the adsorbed CO when the temperature of the CO absorbent 27 is higher than the reference temperature. Therefore, as desorption control, temperature elevation control is performed for making the CO absorbent rise in temperature. Temperature elevation control is for example the method of retarding the injection timing of fuel so as to make the temperature of the exhaust gas rise, the method of injecting fuel into the combustion chambers 2 in the second half of the exhaust stroke so as to make the temperature of the exhaust gas rise, or the method of using a variable valve operation mechanism which changes the opening operation of the intake valves and exhaust valves so as to make high temperature exhaust gas being burned flow into the exhaust system.

If performing temperature elevation control, the CO which had been adsorbed at the CO adsorbent 27 is desorbed into the exhaust gas. The exhaust gas containing this CO flows into the exhaust purification catalyst 22. Due to this, the HC in the exhaust gas undergoes an oxidation reaction on the exhaust purification catalyst 22 whereby the catalyst temperature T rises and therefore even if low temperature exhaust gas which passed through the exhaust turbine route R1 flows in, the temperature will not fall below the activation temperature Ta. Further, exhaust gas which contains CO itself becomes a high temperature due to temperature elevation control and therefore contributes to the rise in temperature of the exhaust purification catalyst 22.

FIG. 6 is a flowchart of a catalyst temperature elevation control operation according to an embodiment of the present invention. This operation is performed as a routine which is executed by the electronic control unit (ECU) 30 for interruption every predetermined set time.

First, at step 100, it is judged whether an execution condition for the catalyst temperature elevation control stands. The execution condition for the catalyst temperature elevation control for example is that the catalyst is at a predetermined temperature or less, the exhaust turbine is at a predetermined temperature or less, idling continues for a predetermined time, a predetermined time elapses from engine stopping, etc. When the execution condition does not stand, there is no need to execute catalyst temperature elevation control according to the present invention, so the routine is ended.

On the other hand, when, at step 100, the execution condition stands, the routine proceeds to step 101. Next, at step 101, the exhaust gas flow switching valve 28 is used to switch to the bypass route R2, then the routine proceeds to step 102. Next, at step 102, the catalyst temperature T of the exhaust purification catalyst 22 is read, then the routine proceeds to step 103.

Next, at step 103, it is judged if the catalyst temperature T which was read at step 102 is larger than a target temperature Tg. The target temperature Tg, in the embodiment shown in FIG. 4, is the activation temperature Ta and, in the embodiment shown in FIG. 5, is the desorption control executable temperature T. When the catalyst temperature T is the target temperature Tg or less, to raise the catalyst temperature T, the routine proceeds to step 102 to continue engine operation while in the state switching the exhaust gas flow to the bypass route R2, and the above processing is repeated.

On the other hand, when, at step 103, the catalyst temperature T is larger than the target temperature Tg, the routine proceeds to step 104. Next, at step 104, desorption control is executed. This desorption control, as explained above, differs in content of processing depending on the storing agent 27.

When, at step 104, execution of desorption control is ended, the exhaust gas flow switching valve 28 is used to switch to the exhaust turbine route R1. The timings of execution of desorption control and switching to the exhaust turbine route R1, as explained above, are determined so that the exhaust gas flow which includes the ingredients desorbed from the storing agent 27 by the desorption control reliably flows into the exhaust purification catalyst 22. Next, the routine is ended.

Due to the above, according to the present invention, when the exhaust purification catalyst should be raised in temperature, the predetermined period bypass route may be used to raise the temperature earlier, while the storing agent which is arranged in the bypass passage may be used to prevent deterioration of the exhaust properties for this predetermined period. Furthermore, by utilizing the specific ingredients in the exhaust gas stored over this predetermined period, there is the advantage that the once activated exhaust purification catalyst can be prevented from losing its activity and earlier utilization of the exhaust driven type supercharger is enabled.

Note that, the present invention was described based on specific embodiments, but a person skilled in the art could make various changes, revisions, etc. without departing from the claims and concept of the present invention.

### Reference Signs List

- 4: intake manifold
- 5: exhaust manifold
- 7: exhaust driven type supercharger
- 7b: exhaust turbine
- 22: exhaust purification catalyst
- 26: the bypass passage
- 27: storing agent
- 28: exhaust gas flow switching device

## Claims

1. A control system of an internal combustion engine which arranges in an engine exhaust passage an exhaust turbine of an exhaust driven type supercharger, arranges in the exhaust passage downstream of said exhaust turbine an exhaust purification catalyst, connects the exhaust passage between said exhaust purification catalyst and said exhaust turbine with the exhaust passage upstream of said exhaust turbine by a bypass passage, arranges in said bypass passage a storing agent which stores a specific ingredient in the exhaust, and is provided with an exhaust gas flow switching device which selectively switches the exhaust gas flow between a flow which flows through said exhaust turbine into said exhaust purification catalyst and a flow which flows through said bypass passage into said exhaust purification catalyst, said control system of an internal combustion engine using said exhaust gas flow switching device to switch the exhaust gas flow to said flow through the bypass passage when said exhaust purification catalyst should be raised in temperature and performing desorption control to desorb the ingredient stored in said storing agent, then using said exhaust gas flow switching device to switch the exhaust gas flow to said flow through the exhaust turbine when the temperature of said exhaust purification catalyst rises to a target temperature.

2. A control system of an internal combustion engine as set forth in claim 1, **characterized in that** said specific ingredient is an HC and said storing agent is an HC absorbent.

3. A control system of an internal combustion engine as set forth in claim 1, **characterized in that** said specific ingredient is NOx and said storing agent is an NOx storage reduction catalyst which stores NOx which is contained in the exhaust gas when an air-fuel ratio of the inflowing exhaust gas is lean, and reduces and purifies the stored NOx when the air-fuel ratio of the inflowing exhaust gas becomes a stoichiometric air-fuel ratio or rich.

4. A control system of an internal combustion engine as set forth in claim 1, **characterized in that** said specific ingredient is CO and said storing agent is a CO absorbent.
